# NEW EUROPEAN PATENT SPECIFICATION

(11) **EP 0 277 108 B2**
(45) Date of publication and mention of the opposition decision: **05.04.2000**
(45) Mention of the grant of the patent: 21.12.1994
(21) Application number: 88850033.7
(22) Date of filing: 27.01.1988
(51) Int. Cl.: G05D 7/00, A01M 7/00, G01F 1/37

(54) **Equipment for measuring spray patterns of farm sprayers**
Vorrichtung zum Messen des Berieselungsmusters einer Feldsprengmaschine
Dispositif de mesure de la distribution d'arrosage d'une arroseuse agricole

(30) Priority: 27.01.1987 SE 8700301
(43) Date of publication of application: 03.08.1988
(73) Proprietor: HARDI INTERNATIONAL A/S, 2630 Taastrup (DK)
(72) Inventor: Alness, Kenneth Arvid, S-755 90 Uppsala (SE); Brandt, Jan Petter, S-752 51 Uppsala (SE); Klensmeden, Mats Staffan, S-753 22 Uppsala (SE)
(74) Representative: Siiger, Joergen

(56) References cited:
- EP-A- 0 145 144
- EP-A- 0 149 521
- FR-A- 2 579 319
- ADVANCES IN INSTRUMENTATION, vol. 39, part 1, 22nd-25th October 1984, pages155-162,179-182, ISA, Research Triangle Park, NC, US; W.J. AVERETT et al.:"Construction and evaluation of a flow test stand"
- LE NOUVEL AUTOMATISME, vol. 26, no. 30, March 1981, pages 49-55, Paris, FR; D.MANSION: "Le point sur les capteurs: 4. Mesure des débits"
- Journal of Agricultural Engineering Research,1967,Volume 12,pages 173-177

## Description

This invention concerns an equipment for determining the spray pattern for sprayers of the type comprising a boom with attached nozzles such as those used in agriculture, whereby the equipment permits simultaneous measurements of the spray pattern from several spray nozzles on the spraying device.

The known flow meters have many deficiencies and there is a general desire to develop a flow meter which works rapidly and reliably with a minimum of losses and measuring errors, and is robust and inexpensive.

Such a flow meter has been developed for an equipment for control of the spray pattern of a farm sprayer and the invention will be described in connection with such a sprayer. However, the flow meter is not restricted solely to applications in connection with such sprayers.

When spraying different types of crops and other plants it is necessary to have, on one hand, a certain smallest quantity of pesticide per unit of area in order to achieve the correct effect but, on the other hand, this amount may not exceed a certain level since the pesticide may then have a negative influence on the crop or the corresponding target. Consequently, sprayed fields can frequently be seen where the weeds grow in strips and/or how the crop has been damaged also in strips on account of the nozzles on the sprayer being incorrectly adjusted or out of order.

In order to guarantee a smallest quantity of pesticide reaching the target per unit of area, the farmers frequently adjust the sprayed volume as close as possible to the maximally permitted volume, whereby the adjustments are made according to special adjustment curves or other instructions and are not based on practical measurements. In practice, this implies that if the sprayed amount could be reduced to the minimum amount per unit of area then there would be savings of about 25% of the pesticide in comparison with the amount sprayed today. This would be a major economic saving for the farmer and an important reduction in the amount of poison entering the natural environment. Consequently, it is of great interest both to the farmer and to society to be able to reduce the amount of pesticides sprayed.

The tractor-mounted or towed sprayers used today in agriculture have booms which are up to 24 metres long with a spacing of up to 50 centimetres between the nozzles. Consequently, the spray pattern involves a considerable distance, and the operation of fairly many nozzles must be checked, if the sprayer is to operate satisfactorily and give a uniform spray volume along the entire boom, the spray pattern must be controlled and adjusted whereby the adjustments in some cases can be made to individual nozzles, and in other cases the nozzles must be replaced.

In order to check and adjust the spray pattern on booms up to 24 metres long, the test equipment comprises 15 metre long so-called patternators, over which the boom is placed and onto which a liquid, usually water, is sprayed during the test. The patternator is divided into 10 centimetre wide channels, each of which flows into a measuring cylinder. A one millimetre error in the width of these channels will cause a measuring error of 1%, which may cause problems since attempts are made to achieve a uniformity in the spray pattern of about ± 15% where the measurement error may only be ± 2%. During the tests the sprayer operates for a given period of time whereafter the volume of liquid in each measuring cylinder, which may amount to as much as 150, is read. This test should be repeated after each adjustment until the sprayer is found to provide an acceptable spray pattern.

Other known constructions enable measurements of the condition of individual nozzles. However, such measurements are not satisfactory, as they do not consider the sprayed pattern but only provide data on the volume of sprayed liquid per unit of time. The vital information required is, of course, how evenly the liquid is spread over the target from a certain height. For this reason the spraying must be done at a given height above the measuring area, i.e. in the known cases it will be above a patternator.

European patent application No. 145,144 relates to a spray pattern analyzer for use in analyzing spray patterns formed by spray nozzles which are attached to a spray boom. The analyzer comprises a corrugated collector tray mounted on a cart. The collector tray receives collector test tubes each being aligned with the troughs. When the troughs are partially filled with spray, the collector tray is tilted so that the spray flows into the test tubes to provide a visual indication of the spray pattern.

The Journal of Agricultural Engineering Research 1967, Vol.12, pages 173-177 illustrates an equipment for measuring spray patterns of an agricultural sprayer. An accumulation of sprayed liquid is performed, said accumulation being recorded photographically. This is a very inaccurate and time consuming process, and it probably requires that the measuring equipment stands on a horizontal support in a laboratory.

The known devices are generally of stationary type, although there are some which can be taken apart and moved to other places. However, in practice the sprayer must be taken to a test station and many farmers do not consider it worth while devoting time to get their sprayer checked and adjusted. Many farmers prefer to adjust their sprayer according to what they think looks fine and then spray on the basis of their experience, being aware of the risks mentioned above.

The present invention aims at overcoming the above-mentioned difficulties and disadvantages. This aim is achieved by the invention as defined in claim 1 and elaborated in the following pages in connection with the attached drawing, wherein
Fig. 1 is a schematic side view of a test equipment with a flow meter according to the invention.
Fig. 2 is a schematic representation of a flow meter which may be used in connection with the invention, and
Fig. 3 is a schematic view of an alternative flow meter.

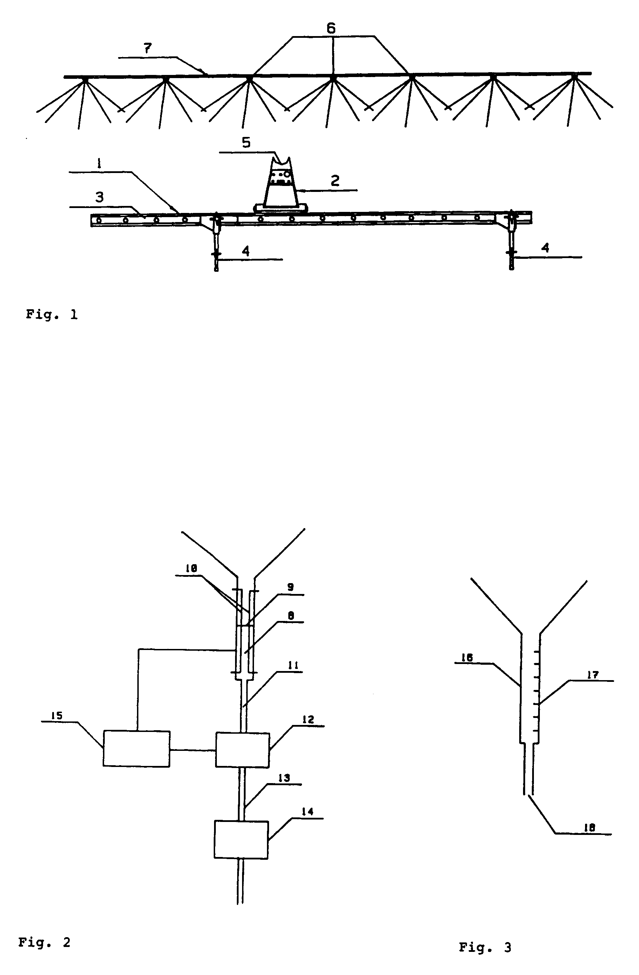

The test equipment according to the invention for determining the spray pattern for sprayers comprising a boom is schematically illustrated in Fig. 1. Said test equipment consists of a track (1), which can be extended to the desired length, and a sampling trolley (2) which runs along the track (1). In the proposed design the track (1) consists of ladder-shaped elements which preferably are made of aluminium and which are fitted with couplings so that the ladder-shaped elements form a track with two parallel rails (3), of which only one can be seen in Fig. 1. The ladder-shaped elements are fitted with detachable or movable legs (4) with adjustable heights.

The sampling trolley (2) is equipped with a channel (5) which has a desired length of about 1.20 metres, i.e., it has the same length as the trolley (2) is wide and a width of 10 centimetres. The trolley (2) has its own control unit which is powered by a chargeable battery placed in the trolley (2) so that this trolley can be manoeuvered so as to run along the track (1) either continuously or in predetermined steps, normally 10 centimetres long. The trolley (2) also carries a computer.

At sampling a spray boom (7) is placed at a suitable height above a track (1) when the trolley (2) is at one end of the track (1). The valves on the sprayer are open so that the liquid will spray out of the nozzles (6) on the boom (7). Subsequently, the trolley (2) runs beneath the boom (7) from one end to the other, preferably stopping every 10 centimetres.

The liquid sprayed into the channel (5) flows, as can be seen in Fig. 2, through a measuring cell (8) whereupon the level of the liquid (9) in the cell (8) is sensed by an electronic level sensor (10). The liquid flows through a tube (11) from the bottom of the measuring cell (8) to a pump (12) and further through this pump to a tube (13) leading to a flow meter (14) and then out of the equipment, usually directly onto the ground since the liquid is harmless. The level sensor (10) transmits a signal to a control unit (15) which in turn activates the pump (12) so that the level (9) in the measuring cell (8) is kept substantially constant.

Fig. 3 shows a simple device for measuring the flow rate. The device consists of a measuring cylinder (16) which receives the liquid the flow rate of which is to be measured. The measuring cylinder (16) has a series of axially arranged reference markings (17) which can consist of either electronic level sensors or of markings made in the glass of the cylinder (16) which enable the level of liquid in the cylinder (16) to be read-off visually. In the bottom of the measuring cylinder (16) there is a narrowed outlet (18) with a given cross-section area. This implies that the liquid entering the measuring cylinder (16) from the top gradually accumulates, since the outlet (18) does not directly permit the same rate of outflow as the rate of inflow. Thus, a column of liquid is established in the measuring cylinder (16), and this column will have a height which is balanced against the inflowing and outflowing liquid thus providing a measure of the flow rate.

The values measured by the flow meter, and obtained each time the trolley (2) stops, are recorded by the computer and when all samples have been taken the computer is linked to a printer which provides a compilation of the flow rate or the spray pattern at each point where the trolley has stopped. By means of this equipment it is possible to obtain not only details of the sprayer's condition but also a written record thereof.

In itself, the computer can be stationary and in communication with the different sensors and other devices on the trolley (2) through a cable. By placing all equipment for collecting data on the trolley (2) itself, it is possible to achieve a compact and easily-managed unit. If the number of tests is such that the battery becomes run down, it can easily be replaced by a fully-charged battery, or the battery can be recharged.

It has become general practice to measure the spray patterns in 10 centimetre wide sectors placed one after the other, and consequently, in this invention the trolley is designed both with a 10 centimetre wide collection channel (5) and also with equipment that enables it to stop for a predetermined, adjustable time each 10 centimetres along its track.

In order to achieve these stops, it is suitable to have the rail upon which the trolley (2) runs fitted with holes which can be identified by a sensor. When the sensor identifies a hole, a spring-loaded roller or ball is activated in the direction of travel by an electromagnetic device which pushes the spring-loaded roller or ball down onto the rail and when the next hole is reached, the roller or ball falls into said hole, thereby locking the trolley (2) in the correct position. When the adjusted time for the stop is expended, the roller or ball is lifted and the trolley (2) is driven forward to the next stop.

The track (1) preferably consists of conventional light-metal ladders which have been complemented with coupling devices, legs and said stop-holes.

Although the measuring of the flow rate has been described in connection with a special equipment for the inspection of farm sprayers, it is realized that it is suitable within many fields in which flow rates are to be measured. The device shown in Fig. 2 is preferable as the flow by the pump (12) is forced through the flow meter (14) and due to this fact, there are no losses caused by obstacles in the way of flow. All is based upon the idea that the liquid level (9) in the measuring cylinder (8) is kept invariable.

Consequently, with this invention it is possible to achieve the objects mentioned initially and to obtain equipment which is easy to transport and to both put together and take apart, and where the mode of work is simple and reliable in order to achieve the registration of the spray pattern for, primarily, agricultural sprayers.

## Claims

1. Equipment for determining the spray pattern for sprayers of the type comprising a boom (7) with attached nozzles (6), a track (1) beneath the boom (7) extending substantially from one end of the boom to the other end, the boom (7) being placed at a suitable height above the track (1) along which a trolley (2) moves with a collection channel (5) of predetermined size, **characterized** in that the liquid caught by the channel (5) is measured with regard to its flow rate by measuring means and recorded by a computer, the said measuring means and computer being positioned on the trolley (2), the flow rate at a number of points along the track (1) being used to obtain the spray pattern.

2. Equipment according to claim 1, **characterized** by the trolley (2) being self-propelled along the track (1), moving either continuously or stepwise.

## Patentansprüche

1. Anordnung zum Bestimmen des Spritzmusters für Putzvorrichtungen des Typs, die einen Ausleger (7) mit daran angebrachten Düsen (6) aufweisen, mit einer Laufbahn (1) unterhalb des Auslegers (7), die sich im wesentlichen von einem Ende des Auslegers zum anderen Ende erstreckt, wobei der Ausleger (7) in einer geeigneten Höhe über der Laufbahn (1) angeordnet ist, längs welcher ein Spurwagen (2) mit einem Sammelkanal (5) vorbestimmter Größe fährt,
**dadurch gekennzeichnet,** daß
die durch den Kanal (5) aufgenommene Flüssigkeit in Bezug auf deren Strömungsrate mit Hilfe einer Meßeinrichtung gemessen wird und durch einen Computer aufgezeichnet wird, wobei die Meßeinrichtung und der Computer auf dem Spurwagen (2) positioniert sind und wobei die Strömungsrate an eine Anzahl von Stellen entlang der Laufbahn (1) zum Erhalten des Sprühmusters verwendet wird.

2. Anordnung nach Anspruch 1,
**dadurch gekennzeichnet,** daß
der Spurwagen (2) längs der Laufbahn (1) selbst angetrieben ist und sich entweder kontinuierlich oder schrittweise bewegt.

## Revendications

1. Dispositif destiné à déterminer la distribution d'arrosage pour des arroseurs du type comportant une flèche (7) avec des buses fixes (6), un rail (1) sous la flèche (7) qui s'étend sensiblement depuis une extrémité de la flèche jusqu'à l'autre extrémité, la flèche (7) étant placée à une hauteur appropriée au-dessus du rail (1) le long duquel se déplace un chariot (2) avec une goulotte de collecte (5) d'une taille prédéterminée, caractérisé en ce que le liquide capté par la goulotte (5) est mesuré par rapport à son débit par un moyen de mesure et enregistré par un calculateur, ledit moyen de mesure et le calculateur étant placés sur le chariot (2), le débit en plusieurs points le long du rail (1) étant utilisé afin d'obtenir la distribution d'arrosage.

2. Dispositif selon la revendication 1, caractérisé en ce que le chariot (2) est autopropulsé le long du rail (1), en se déplaçant en continu ou pas-à-pas.
